# EUROPÄISCHE PATENTSCHRIFT

(11) **EP 2 658 365 B1**
(45) Veröffentlichungstag und Bekanntmachung des Hinweises auf die Patenterteilung: **21.12.2016**
(21) Anmeldenummer: 12710658.1
(22) Anmeldetag: 02.03.2012
(51) Int. Cl.: A01K 1/015

(54) **TIEREINSTREU**
ANIMAL LITTER
LITIERE POUR ANIMAUX

(30) Priorität: 02.03.2011 DE 102011012865; 20.05.2011 DE 102011102737
(43) Veröffentlichungstag der Anmeldung: 06.11.2013
(73) Patentinhaber: J. Rettenmaier & Söhne GmbH + Co. KG, 73494 Rosenberg (DE)
(72) Erfinder: RETTENMAIER, Josef Otto, 73494 Rosenberg (DE)
(74) Vertreter: Dr. Weitzel & Partner
(86) Internationale Anmeldenummer: PCT/EP2012/000909
(87) Internationale Veröffentlichungsnummer: WO 2012/116822

(56) Entgegenhaltungen:
- DE-C1- 19 543 311
- GB-A- 2 411 334
- US-A- 3 256 857

## Beschreibung

Die Erfindung betrifft eine Tiereinstreu auf organischer Basis. Eine solche Tiereinstreu wird verwendet für Tiertoiletten, beispielsweise Katzentoiletten. Die Tiereinstreu kann eine klumpende oder eine nicht-klumpende sein. Das Klumpen wird durch Beigabe eines Additivs erreicht, beispielsweise durch Guarkernmehl. Sie wird in einen Kasten eingefüllt, in dem das Tier sein Geschäft verrichten kann.

DE 195 43 311 C1 beschreibt eine organische, klumpende Tiereinstreu. Diese umfasst größtenteils Presslinge aus Holzpartikeln wie Holzspänen sowie organische Verdickungsmittel. Die Presslinge sind zunächst Formkörper von der Gestalt von kleinen Würstchen. Diese werden anschließend zu noch kleineren Partikeln zertrümmert. Die Partikel haben einen mittleren Durchmesser von 2 - 5 mm.

EP 1 808 068 beschreibt eine klumpende Tiereinstreu, die ebenfalls auf der Basis von Holzspänen zusammengesetzt ist, und die aus Presslingen mit einer Dicke von 3 - 4,8 mm besteht. Die Presslinge haben eine relativ glatte Oberfläche. Deshalb haften sie nur in geringem Maße am Fell (sogenannte geringe Fellgängigkeit) und an den Pfoten. Die Schüttdichte einer solchen Tiereinstreu ist hoch, das heißt die Presslinge sind beim Verkauf in einem Behältnis, wie einem Beutel, dicht gepackt und haben daher ein hohes Gewicht pro Volumeneinheit. Ein Nachteil einer solchen Tiereinstreu besteht in der geringen Ergiebigkeit.

Die verpressten Partikel können jegliche Gestalt haben. Sie können als Pellets, Granulat, oder Kompaktat bezeichnet werden. Sie haben den Nachteil, dass beim Schütten, zum Beispiel beim Befüllen der Tiertoilette, oder beim Tragen in einem Beutel stets ein gewisser Abrieb auftritt. Die abgeriebenen Feinstoffe bleiben besonders leicht am Tierfell oder an den Pfoten hängen, und werden nach dem Erledigen des Geschäftes in die Wohnung getragen.

Der Erfindung liegt die Aufgabe zugrunde, eine Tierstreu anzugeben, die nur in geringem Maße fellgängig ist, die saugfähig ist, die weitgehend abriebstabil ist, und die ein niedriges Schüttgewicht besitzt.

Diese Aufgabe wird gelöst mittels einer Tiereinstreu gemäß Anspruch 1.

Demgemäß umfasst die Tiereinstreu natürliches, organisches Material aus unverpressten Partikeln. Die unverpressten Partikel sind Holzpartikel von der Gestalt von Quadern oder Würfeln oder sonstigen geometrischen Körpern mit glatten Oberflächen. Jedes Partikel besteht aus einem einzigen Stück. Die Partikel können durch Hacken erzeugt werden, beispielsweise direkt von einem Holzstamm. Sie können auch erzeugt werden durch Schälen einer Folie (Furnier) von einem Stamm mit anschließendem oder gleichzeitigem Zerhacken der Folie. Auch andere Herstellungsverfahren sind denkbar. So lassen sich die genannten Partikel auch durch Herstellen von Hackschnitzeln aus Baumstämmen erzeugen; die Hackschnitzel werden ihrerseits nochmals zerlegt in die genannten Partikel. Entscheidend ist, dass die Oberflächen der Partikel nicht-fasrig sind, sodass die Partikel nicht am Tierfell haften bleiben. Es kommt somit darauf an, dass die unverpressten Partikel möglichst glatte Oberflächen haben. Solche Oberflächen ergeben sich dann, wenn Herstellungsprozesse angewandt werden, bei denen die Partikel vorwiegend durch Schneiden erzeugt werden.

Weniger günstig ist ein Erzeugen der Partikel durch Zerreisen oder Zerdrücken oder Zerkrümeln. Es sollen somit Prozesse vermieden werden, bei welchen ein Faserbündel von einem benachbarten Faserbündel durch Reißen getrennt wird, weil hierdurch raue Oberflächen entstehen.

Die erfindungsgemäße Tiereinstreu enthält zu 100% unverpresste Partikel mit glatter Oberfläche.

Eine solche Tereinstreu ist nur in geringem Maße fellgängig, das heißt sie haftet nicht am Fell und nicht an den Pfoten des Tieres. Sie ist saugfähig. Sie ist ferner abriebstabil und damit nur wenig staubend. Die Schüttdichte ist relativ gering, das heißt sie weist ein großes Volumen pro Gewichtseinheit auf. Damit lässt sich eine Tiertoilette mit einem Quantum Tiereinstreu füllen, das ein relativ geringes Gewicht hat. Dies wirkt sich günstig auf die Handhabung der Tiereinstreu aus, beispielsweise beim Einkaufen und Transportieren eines Beutels mit Tiereinstreu. Die Tiereinstreu ist somit sehr ergiebig.

Die unverpressten Partikel haben die Gestalt von Quadern oder Würfeln. Ihre Oberflächen sind glatt und nicht-fasrig.

Die erfindungsgemäße Tiereinstreu ist klumpend.

Da die Tiereinstreu mit glatter Oberfläche, außerdem einen Anteil an einem klumpenbildenden Mittel wie zum Beispiel Guar, Stärke, Galactomannane oder Mischungen hieraus enthält, so hat es sich als äußerst vorteilhaft erwiesen, der Tiereinstreu Öl zuzufügen, das das klumpenbildende Mittel an der Oberfläche der Partikel haften lässt. Die Erfinder haben nämlich erkannt, dass sich feinteiliges Guar durch Aufbringen von Öl auf die Holzpartikel an diesen fixieren lässt. Hierdurch wird ein Entmischen von Holz und Guar vermieden. Es genügt ein minimaler Anteil an Öl, um dies zu erreichen. So genügen beispielsweise ein bis zwei Gewichtsprozent Öl, bezogen auf die Gesamtmenge. Ein großer Vorteil besteht auch darin, dass der Anteil des klumpenbildenden Mittels minimiert werden kann auf beispielsweise 5 bis 9 Gewichtsprozent, bezogen auf die Gesamtmenge, um zu einem klumpenden Einstreuprodukt zu kommen. Es hat sich als vorteilhaft erwiesen, die Größe aller Partikel derart zu bemessen, dass zwischen 50% und 100% aller Partikel eine maximale Erstreckung von 0,5 bis 10mm aufweist.

Der Anteil von Öl kann minimal sein. Die folgenden Anteile kommen in Betracht, ausgedrückt als Gewichtsprozent bezogen auf die Gesamtmenge Tiereinstreu: 0,1 bis 0,5, 0,5 bis 1,0, 0,1 bis 1,5, 1,5 bis 2,0, 2,5 bis 3,0, 3,5 bis 4,0, 4,5 bis 5,0, 5,0 bis 6,0, und so weiter.

Zudem hat das Öl eine staubbindende Wirkung, in dem nicht nur die klumpenbildende Komponente, sondern auch Feinteile des die Tiereinstreu bildenden Materials an gröbere Partikel gebunden werden und somit in der Tiereinstreu nicht mehr als freie feinteilige Partikel vorliegen, deren Nachteile bereits beschrieben wurden.

## Patentansprüche

1. Einstreu für eine Toilette für Haustiere, überwiegend aus natürlichem
organischem Material, **gekennzeichnet durch** die folgenden Merkmale:
die Einstreu enthält unverpresste Partikel;
die unverpressten Partikel sind Holzpartikel von der Gestalt von Quadern oder Würfeln oder sonstigen geometrischen Körpern;
der Anteil an unverpressten Partikeln beträgt 100%;
die Partikel sind zum Erzielen glatter, nicht-fasriger Oberflächen **durch** Hacken oder Schneiden erzeugt.;
die Einstreu enthält Guar in Mehlform oder ein anderes klumpenbildendes Mittel;
die Einstreu enthält ein Öl;
der Anteil an klumpenbildendem Mittel beträgt 0,1 bis 13 Gewichtsprozent, auf die Gesamtmenge der Einstreu bezogen;
zwischen 50 und 100 Prozent aller Partikel weisen eine maximale Erstreckung von 1 - 6 mm auf.

## Claims

1. Litter for a toilet for household pets, predominantly made of natural organic material, **characterized by** the following features:
the litter contains uncompressed particles;
the uncompressed particles are wooden particles in the form of cuboids or
cubes or other geometric bodies;
the proportion of uncompressed particles is 100%;
the particles are produced by chopping or other cutting to achieve smooth,
non-fibrous surfaces;
the litter contains guar in flour form or another clumping agent;
the litter contains an oil;
the proportion of clumping agent is 0.1 to 13 wt.%, in relation to the total quantity of the litter;
between 50 and 100% of all particles have a maximum extension of 1-6 mm.

## Revendications

1. Litière pour bac hygiénique pour animaux domestiques, composée en majeure partie de matériau organique naturel, **caractérisée en ce que** :
- la litière contient des particules non comprimées ;
- les particules non comprimées sont des particules de bois en forme de carrés ou de cubes ou d'autres corps géométriques ;
- la proportion de particules non comprimées est de 100 % ;
- les particules sont produites par hachage ou découpe afin d'obtenir des surfaces lisses et non fibreuses ;
- la litière contient du guar sous forme de farine ou un autre agent agglomérant ;
- la litière contient une huile ;
- la proportion d'agent agglomérant est comprise entre 0,1 et 13 % du poids par rapport à la quantité totale de litière ;
- entre 50 % et 100 % de toutes les particules ont une étendue maximale de 1 à 6 mm.
